# FASCICULE DE BREVET EUROPEEN

(11) **EP 4 214 408 B1**
(45) Date de publication et mention de la délivrance du brevet: **10.12.2025**
(21) Numéro de dépôt: 21783329.2
(22) Date de dépôt: 09.09.2021
(51) Int. Cl.: F02K 1/64, F02K 1/72, B32B 3/12, B29C 70/34, B29C 70/72, F04D 29/54, B29C 70/22, B29C 70/54, B29C 70/12, B29D 99/00, B29C 70/08, B29C 70/46, B29L 31/00, B29K 105/12, B29K 105/08

(54) **PROCEDE DE FABRICATION D'UNE PIECE EN MATERIAU COMPOSITE A STRUCTURE ALVEOLAIRE ET PIECE CORRESPONDANTE**
VERFAHREN ZUR HERSTELLUNG EINES VERBUNDWERKSTOFFTEILS MIT ZELLSTRUKTUR UND ENTSPRECHENDES TEIL
METHOD FOR PRODUCING A COMPOSITE MATERIAL PART HAVING A CELLULAR STRUCTURE AND CORRESPONDING PART

(30) Priorité: 17.09.2020 FR 2009424
(43) Date de publication de la demande: 26.07.2023
(73) Titulaire: SAFRAN, 75015 Paris (FR)
(72) Inventeur: LANFANT, Nicolas Pierre, 77550 MOISSY-CRAMAYEL (FR); DUNLEAVY, Patrick, 77550 MOISSY-CRAMAYEL (FR)
(74) Mandataire: Gevers & Orès
(86) Numéro de dépôt international: PCT/FR2021/051544
(87) Numéro de publication internationale: WO 2022/058673

(56) Documents cités:
- EP-A1- 2 819 838
- EP-A2- 0 244 120
- EP-A2- 2 944 452
- DE-A1- 102013 226 017
- JP-A- H06 129 302
- US-A- 3 676 258
- US-A1- 2005 258 575

## Description

### Domaine de l'invention

La présente invention concerne le domaine des pièces en matériau composite à partir d'un renfort fibreux densifié par une matrice, notamment de pièces de turbomachine. Elle vise en particulier, les pièces comportant une structure alvéolaire.

### Arrière-plan technique

Il est connu de réaliser diverses pièces de turbomachine, en particulier de turbomachine d'aéronef, dans un matériau composite dans le but d'améliorer leurs capacités de résistances thermomécaniques et de réduire leur masse.

Certains matériaux composites sont usuellement composés d'un renfort fibreux et d'une matrice. Des exemples de pièces en matériau composite sont décrits dans les documents US-A1-2005/258575, DE-A1-102013226017, US-A-3676258, EP-A-244120 et EP-A1-2819838.

Les structures alvéolaires peuvent constituer des pièces à part entière telles que des grilles d'inverseur de poussée ou des roues d'aubages fixes. Elles peuvent également être utilisées dans la fabrication d'une pièce pour constituer par exemple des fonctions acoustiques telles que des panneaux acoustiques, des volets d'inverseurs de poussée, etc ou des fonctions mécaniques telles que panneaux auto raidis. Un exemple d'inverseur de poussée est décrit dans le document EP-A2-2944452.

Plusieurs technologies sont identifiées pour fabriquer des pièces en matériau composite parmi lesquelles le moulage par injection (ou RTM - acronyme anglais signifiant « Resin Transfert Molding »), l'injection thermoplastique et la thermocompression. L'injection RTM nécessite un renfort fibreux avec dans la plupart des cas des fibres continues. Cette technique requiert un travail manuel et est plutôt envisagée pour les moyennes séries. L'injection thermoplastique d'un renfort fibreux avec des fibres longues ou courtes (fibres dans la résine et moule vide préalablement) permet de fabriquer des pièces très rapidement et avec une grande cadence. Toutefois, dans le cadre des structures alvéolaires, les performances mécaniques des pièces finales obtenues sont restreintes. La fabrication de structures alvéolaires par cette technique engendre une difficulté pour la gestion des lignes de recollement (jonction des flux matière qui se rejoignent). Elle peut être envisagée pour des applications peu chargées. Quant au moulage par thermocompression, celui-ci permet de densifier un renfort fibreux déjà pré imprégné par une matrice en appliquant une pression et en réalisant un traitement thermique à température élevée. Dans le cas d'un renfort fibreux du type préforme stratifiée (empilement de plis selon une séquence déterminée) constituée de fibres continues, la thermocompression est limitante par la forme des pièces et il s'avère nécessaire de draper chaque alvéole individuellement, ce qui est chronophage et couteux. Dans le cas d'une nappe de fibres longues discontinues en combinaison avec la thermocompression, il est possible d'obtenir des gains de coûts de fabrication importants et la fabrication de formes plus complexes. Cependant, cette technique implique une variabilité plus importante des propriétés du matériau, notamment dans le cas des nappes de faibles épaisseurs. En particulier, les propriétés du matériau chutent avec une épaisseur de nappe de fibres longues discontinues inférieures à 2,3 mm. Enfin, selon la stratégie de drapage, des problèmes d'arrachement ou de délaminages peuvent éventuellement survenir au niveau des jonctions des parois d'alvéoles ce qui peut affaiblir la tenue mécanique de la pièce finale.

### Résumé de l'invention

L'objectif de la présente invention est de fournir une solution permettant d'améliorer le procédé de fabrication d'une pièce, en particulier de turbomachine, en matériau composite avec une structure alvéolaire dont l'épaisseur des parois est faible tout en ayant les meilleures performances aérodynamiques et mécaniques.

Nous parvenons à cet objectif conformément à l'invention grâce à un procédé de fabrication d'une pièce en matériau composite comportant une structure alvéolaire, en particulier de turbomachine, la structure alvéolaire comportant au moins une alvéole délimitée par des parois, le procédé comprenant les étapes suivantes :
- une étape d'approvisionnement d'au moins un premier noyau,
- une étape de fourniture d'une nappe d'un premier renfort fibreux comprenant une pluralité de fibres longues discontinues réparties aléatoirement dans un plan,
- une étape de réalisation d'au moins une bande du premier renfort fibreux,
- une étape de réalisation d'un deuxième renfort fibreux sous la forme d'une chaussette continue tressée et obtenue par tressage,
- une étape d'insertion du premier noyau dans la chaussette tressée,
- une étape de drapage de la bande du premier renfort fibreux autour de la chaussette contenant le premier noyau,
- une étape de mise en place de l'ensemble formé de la chaussette contenant le premier noyau et de la bande drapée autour de la chaussette, dans un moule, et
- une étape de thermocompression de l'ensemble installé dans le moule.

Ainsi, cette solution permet d'atteindre l'objectif susmentionné. En particulier, avec une telle chaussette tressée creuse et continue, il suffit de faire passer un noyau présentant la forme de la pièce à réaliser. La chaussette tressée apporte une continuité de fibres sur les parois de l'alvéole qui seront alors très fines (de l'ordre du millimètre ce qui n'est pas négligeable dans le domaine aéronautique par exemple) du fait du tressage de la chaussette. La combinaison d'une chaussette tressée et de la bande d'une nappe de fibres longues discontinues permet de réduire la dispersion des propriétés mécaniques. Une telle combinaison permet également une continuité des fibres au niveau des jonctions des parois d'une alvéole et même d'une alvéole adjacente. Ceci améliore la tenue à l'arrachement (performance mécanique) et améliore la raideur de la jonction ce qui réduit les vibrations et améliore donc les performances aérodynamiques. A cela s'ajoute le fait que le procédé est simple et économique puisque celui-ci permet d'éviter les nombreuses manipulations de plis sur un mandrin de support par exemple.

Le procédé comprend également l'une ou plusieurs des caractéristiques et/ou étapes suivantes, prises seules ou en combinaison :
- le deuxième renfort fibreux de la chaussette est constitué de fibres longues continues.
- le procédé comprend une étape de découpage dans laquelle la chaussette est découpée de manière à former une première portion de chaussette ayant une longueur correspondant à une hauteur du premier noyau.
- les fibres de la bande et de la chaussette sont pré-imprégnées.
- chaque ensemble est mise en place dans le moule sous forme de rangée.
- l'étape de mise en place dans le moule comprend une sous étape de mise en place d'un pli entre chaque rangée.
- le procédé comprend une étape de polymérisation partielle de l'ensemble formé de la chaussette contenant le premier noyau et de la bande drapée autour de la chaussette, l'étape de polymérisation partielle étant réalisée avant l'étape de polymérisation ou avant l'étape de mise en place dans le moule.
- au moins un deuxième noyau est inséré dans la même chaussette qui est découpée en une deuxième portion de chaussette et au moins une bande est drapée autour de la deuxième portion de chaussette, et en ce que l'ensemble formé de la deuxième portion de chaussette autour du deuxième noyau et la bande drapée autour de la chaussette est mis en place dans le moule.
- le procédé comprend la mise en place au moins d'une troisième portion de chaussette autour d'au moins deux ensembles de noyaux contenus chacun dans une portion de chaussettes lesquelles sont drapées d'au moins une bande, les deux ensembles étant juxtaposés.
- plusieurs bandes de la nappe sont drapées autour de la portion de chaussette contenant le noyau.
- la chaussette est obtenue par un tressage biaxial ou triaxial.
- le premier et/ou le deuxième noyau(x) est/sont fusible(s).
- le procédé comprend la fourniture d'un moule.
- les fibres du pli sont pré-imprégnées.
- le procédé comprend une étape de pré-imprégnation des fibres du ou des renfort(s) fibreux.
- l'étape de pré-imprégnation est réalisée préalablement à l'étape de polymérisation partielle.

L'invention concerne également une pièce de turbomachine en matériau composite comprenant au moins un renfort fibreux densifié par une matrice, la pièce de turbomachine étant réalisée par le procédé présentant l'une quelconque des caractéristiques précédentes et comprenant une structure alvéolaire avec au moins une alvéole délimitée et séparée par des parois.

La pièce de turbomachine peut être une grille d'inverseur de poussée ou un volet d'inverseur de poussée. La pièce peut être encore une paire d'aubes reliées par une plateforme radialement interne et par une plateforme radialement externe, l'alvéole séparant la paire d'aubes suivant une direction circonférentielle, un multiplet comprenant au moins trois aubes espacées par des alvéoles ou une roue de turbomachine.

L'invention concerne par ailleurs une turbomachine comprenant une pièce en matériau composite telle que susmentionnée.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
[Fig. 1] La figure 1 est une vue en coupe axiale et partielle d'un exemple de turbomachine à laquelle s'applique l'invention ;
[Fig. 2] La figure 2 est une vue schématique et en perspective d'un exemple d'une pièce en matériau composite avec une structure alvéolaire selon l'invention ;
[Fig. 3] La figure 3 est une vue schématique et en perspective d'un autre exemple d'une pièce en matériau composite avec une structure alvéolaire et un fond selon l'invention ;
[Fig. 4] La figure 4 illustre en perspective une nappe DLF d'un premier renfort fibreux selon l'invention ;
[Fig. 5] La figure 5 représente un exemple de bande découpée dans la nappe DLF de la figure précédente selon l'invention ;
[Fig. 6] La figure 6 est une vue schématique et en perspective d'un exemple de renfort fibreux sous la forme d'une chaussette creuse continue selon l'invention ;
[Fig. 7] La figure 7 est une vue schématique et en perspective d'un noyau et d'une chaussette selon l'invention ;
[Fig. 8] La figure 8 est une vue schématique et en perspective d'une portion de chaussette entourant les surfaces d'un noyau selon l'invention ;
[Fig. 9] La figure 9 est une vue schématique et en perspective du noyau inséré dans la chaussette creuse continue selon la figure 8 et le reste de la chaussette découpée selon l'invention ;
[Fig. 10] La figure 10 est une vue schématique et de dessus d'un moule dans lequel sont placés des noyaux entourés respectivement de portion de chaussette et d'au moins une bande DLF entourant chaque portion de chaussette selon l'invention ;
[Fig. 11] La figure 11 est une vue schématique et en perspective d'un exemple d'ébauche d'une paire de redresseurs dont l'alvéole séparant les aubes est au moins obtenue par l'utilisation d'au moins une chaussette contenant un noyau et de bandes DLF selon l'invention ;
[Fig. 12] La figure 12 est une vue schématique et de dessus d'un exemple d'ébauche destinée à réaliser un multiplet ou secteur de roue de turbomachine en matériau composite et en une seule pièce selon l'invention ; et
[Fig. 13] La figure 13 représente un organigramme d'un procédé de fabrication d'une pièce en matériau composite selon l'invention.

### Description détaillée de l'invention

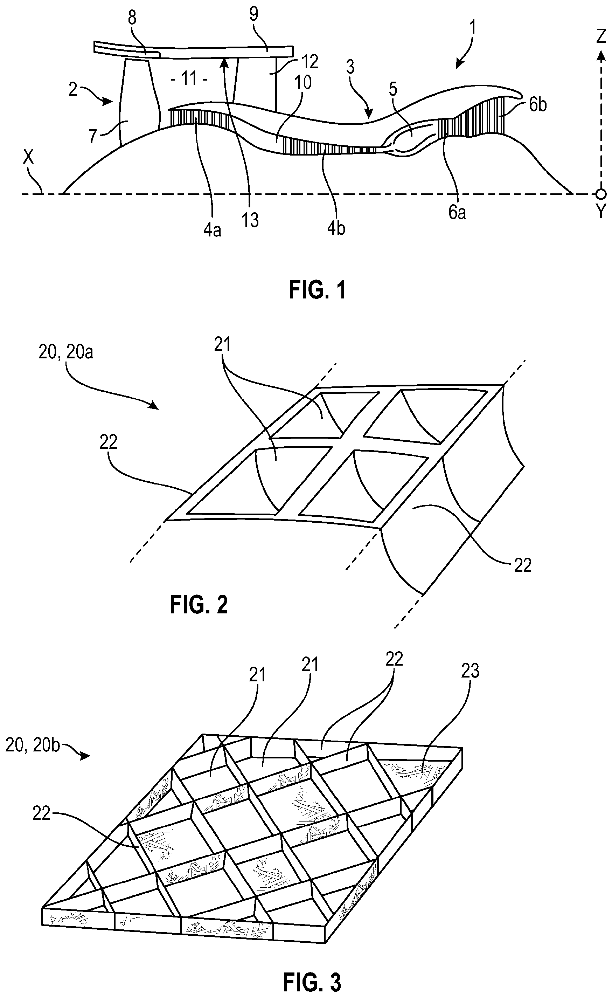

La figure 1 montre une vue en coupe axiale et partielle d'une turbomachine 1 d'axe longitudinal X qui comprend diverses pièces et/ou organes pouvant être réalisés en matériaux composites. Bien entendu l'invention s'applique de manière générale à toutes les pièces en matériau composite présentant des formes complexes (profils à section évolutive par exemple) et dans divers domaines dans lesquels les pièces permettent une transmission des efforts, une réduction de la masse tout en étant économique.

La turbomachine 1 de la figure 1 est une turbomachine double flux et double corps destinée à être montée sur un aéronef. La turbomachine 1 comprend une soufflante 2 qui est montée en amont d'un générateur de gaz 3 ou moteur suivant la circulation des gaz dans la turbomachine et ici suivant l'axe longitudinal X (et même de gauche à droite sur la figure 1). Le générateur de gaz 3 comprend d'amont en aval, un compresseur basse pression 4a, un compresseur haute pression 4b, une chambre de combustion 5, une turbine haute pression 6a et une turbine basse pression 6b. La soufflante 2 comprend une pluralité d'aubes de soufflante 7 qui s'étendent suivant un axe radial Z et dont les extrémités libres sont entourées par un carter de soufflante 8. L'axe longitudinal X est perpendiculaire à l'axe radial Z et aussi à un axe transversal Y. Le carter de soufflante 8 est porté par une nacelle 9, la nacelle 9 et le carter de soufflante 8 étant centrés sur l'axe longitudinal X. La soufflante 2 divise l'air qui entre dans la turbomachine en un flux d'air primaire qui traverse le générateur de gaz et en particulier dans une veine primaire 10, et en un flux d'air secondaire qui circule autour du générateur de gaz dans une veine secondaire 11. Des aubes directrices (OGV pour « Outlet Guide Vane » en anglais) 12 qui se trouvent en aval des aubes de soufflante 7, s'étendant autour de l'axe longitudinal X et à travers la veine secondaire pour redresser le flux d'air secondaire.

Les figures 2 et 3 illustrent chacune une pièce 20 en matériau composite avec un renfort fibreux noyé dans une matrice. En particulier, la pièce 20 comprend une structure alvéolaire. Chaque alvéole 21a, 21b est délimitée par plusieurs parois 22 formant un parallélépipède. Les alvéoles 21a, 21b peuvent toutefois présenter des sections transversales avec d'autres formes telles qu'hexagonale, circulaire, triangulaire. Comme nous pouvons le voir sur la figure 2, les parois permettent de séparer également les alvéoles les unes des autres. La structure alvéolaire forme ici une structure en nid d'abeilles (NIDA). La pièce 20 de la figure 2 en matériau composite à structure alvéolaire permet de réaliser des grilles d'inverseur de poussée 20a qui sont destinées à être installées dans un carter de soufflante par exemple. La pièce 20 comprend un panneau 23 formant un fond depuis lequel s'élèvent les parois 22 de la structure alvéolaire. Ce type de pièce 20 permet avantageusement de réaliser des volets d'inverseurs de poussée ou des panneaux acoustiques 20b. Ces derniers sont agencés typiquement sur une paroi radialement interne 13 du carter de soufflante 8 et en aval des aubes de soufflante 7 suivant l'axe longitudinal.

La pièce en matériau composite à structure alvéolaire telle que ci-dessus est composée d'un premier renfort fibreux à fibres longues discontinues et d'un deuxième renfort fibreux à fibres longues continues. Les renforts fibreux sont destinés à apporter la résistance à la pièce 20 finale obtenue notamment au niveau des parois ou jonctions de la pièce. Les alvéoles de la pièce sont obtenues par des noyaux amovibles autour desquels sont mis en place les renforts fibreux. Les renforts fibreux sont densifiés par une matrice pour obtenir la pièce finale rigide avec les alvéoles (dont les formes respectives sont obtenues par les noyaux).

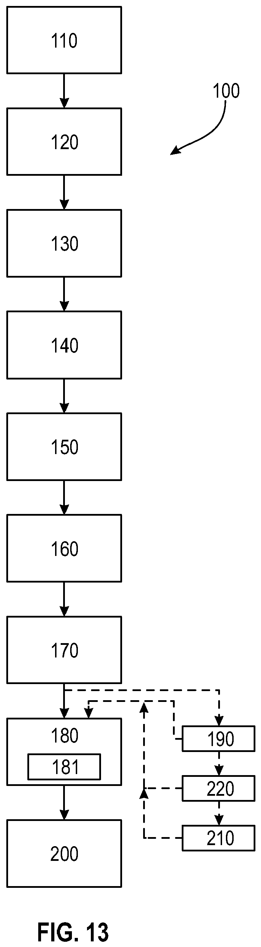

Nous allons maintenant décrire en détail le procédé de fabrication 100 d'une telle pièce alvéolaire. Ce procédé est représenté en figure 13. En référence aux figues 7 et 8, le procédé 100 comprend une étape 110 d'approvisionnement ou de fourniture d'au moins un premier noyau 40 ayant une forme correspondant à celle de l'alvéole 21 de la structure alvéolaire de la pièce finale 20, 20a, 20b. Dans le présent exemple, le noyau 40 présente une forme générale sensiblement cubique avec une hauteur h, une profondeur p et une largeur l. Le noyau 40 présente des surfaces de drapage 41, 42 externes.

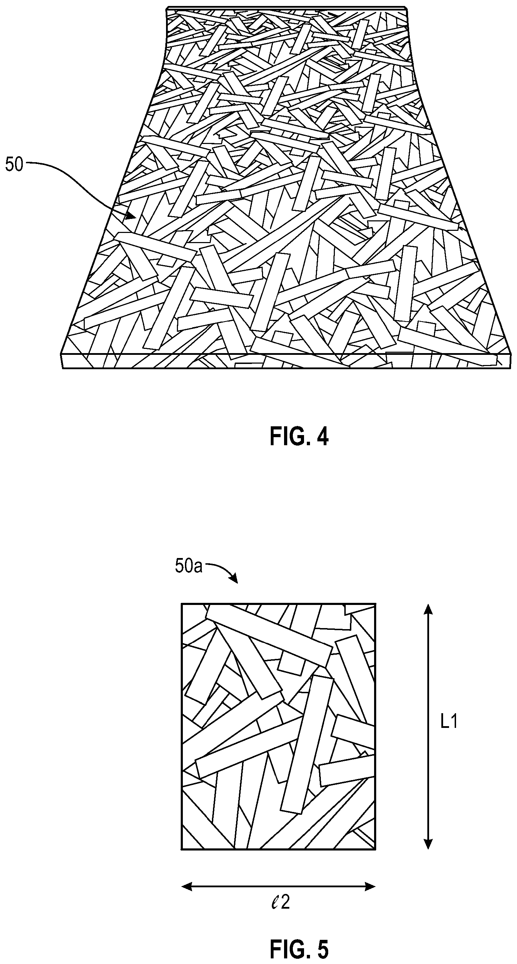

Le procédé 100 comprend une étape 120 de fourniture d'une nappe 50 du premier renfort fibreux telle que représentée sur la figure 4. La nappe 50 comprend une pluralité de fibres longues discontinues qui sont orientées aléatoirement, dans toutes les directions, dans un plan. Les fibres longues discontinues sont connues sous l'acronyme anglais « DLF » pour « Discontinuous Long Fiber »). La nappe DLF 50 comprend en particulier les fibres et une matrice. En particulier, les fibres sont pré-imprégnées.

La nappe DLF 50 est elle-même fabriquée à partir de plusieurs « chips » ou coupons comprenant des fibres orientées. Plus précisément, la fabrication de la nappe DLF 50, comprend le découpage de plusieurs coupons dans une nappe originelle qui comprend des fibres unidirectionnelles imprégnées d'une matrice. Chaque coupon (de fibres unidirectionnelles pré-imprégnées) présente une longueur d'environ 50 mm et une largeur d'environ 10 mm. Chaque coupon présente également une épaisseur d'environ 0,15 mm. La fabrication de la nappe DLF 50 comprend en outre la superposition de plusieurs coupons de manière aléatoire. Cela implique que les fibres de la nappe DLF 50 sont aussi orientées de manière aléatoire (et dans toutes les directions) dans le plan. La nappe DLF est considérée isotrope dans le plan (mêmes propriétés mécaniques dans toutes les directions dans le plan de la nappe DLF) et est assimilée à un matériau orthotrope (trois plans de symétries orthogonaux).

Le procédé de fabrication 100 de la pièce comprend une étape 130 de réalisation d'au moins une bande 50a de la nappe DLF 50 dénommée ci-après bande DLF 50a. Un exemple de bande DLF 50a est illustré sur la figure 5. Cette étape comprend en particulier le découpage de la nappe DLF pour en réaliser une ou plusieurs bandes DLF 50a. En d'autres termes, les fibres des bandes 50a du premier renfort sont pré-imprégnées et comprennent des fibres orientées dans toutes les directions dans un même plan. Chaque bande DLF 50a comprend par exemple une longueur L1 d'environ 100 mm et une largeur l2 d'environ 50 mm. Ces dimensions peuvent être appliquées pour la fabrication d'une grille d'inverseur de poussée. Bien entendu, la dimension des bandes DLF dépend du drapage et/ou de la pièce à fabriquer. Chaque bande DLF a une épaisseur correspondant à l'épaisseur de plusieurs plis pré-imprégnés. Le nombre de plis peut être égal à environ dix plis. Les fibres longues discontinues présentent une longueur comprise entre 10 et 60 mm.

Les fibres sont avantageusement pré-imprégnées avec une matrice polymère d'imprégnation. Cette dernière comprend en particulier une résine thermoplastique ou thermodurcissable. Un exemple de résine thermoplastique est un polyamide, un polyétheréthercétone, un polyéthercétonecétone, poly(sulfure de phénylène) ou un polyaryléthercétone. La résine thermodurcissable comprend par exemple un epoxyde ou un polyimide. Les fibres sont des fibres minérales, métalliques, de polymère thermoplastique ou de polymère thermodurcissable ou un mélange de ces fibres. Un exemple de fibre est la fibre de carbone, de verre ou d'aramide.

De manière préférée, mais non limitativement, la nappe DLF 50 est du type celle commercialisée par la dénomination HexMC^{®}. La matrice ou résine peut être une résine époxy du type 8552^{®} et les fibres sont en carbone.

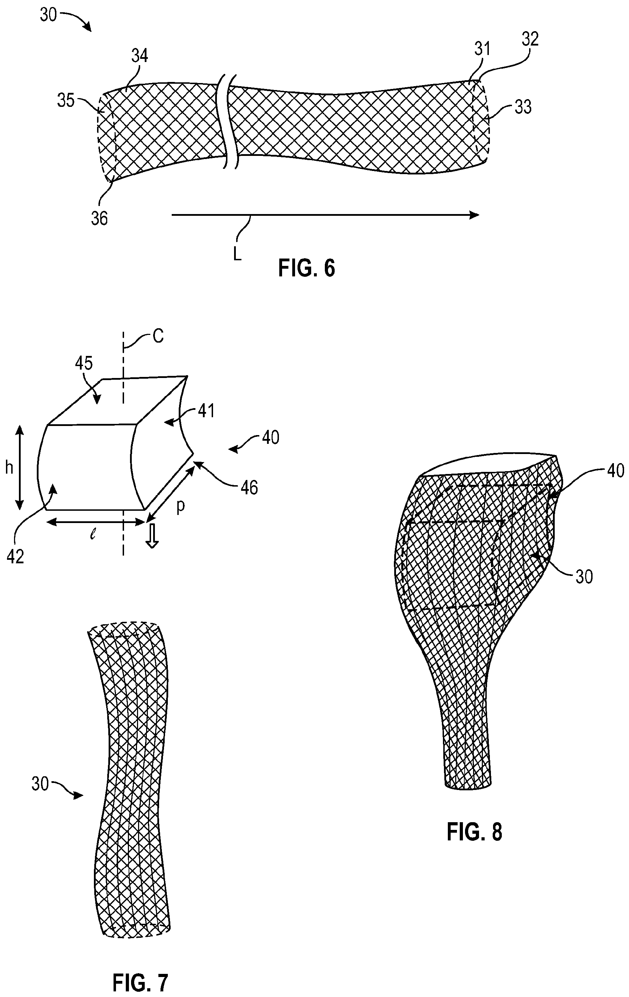

En référence à la figure 6, le procédé comprend une étape 140 de réalisation du deuxième renfort fibreux sous la forme d'une chaussette 30, d'un boyau, ou encore d'une enveloppe. La chaussette 30 est creuse ou tubulaire et continue. Dans le présent exemple, le renfort fibreux de la chaussette 30 est obtenu par tressage suivant une direction longitudinale L (direction d'avance de la tresse) de manière à fournir une stabilité dimensionnelle du renfort fibreux au niveau de l'épaisseur et de la longueur de celle-ci suivant la direction longitudinale. La chaussette 30 comprend une première extrémité 31 qui est ouverte. La première extrémité 31 comprend une première bordure 32 qui délimite une première ouverture 33 débouchant à l'intérieur de la chaussette 30 creuse. La chaussette 30 comprend également une deuxième extrémité 34 (opposée à la première extrémité 31) suivant la direction longitudinale L) qui comprend également une deuxième ouverture 35 délimitée par une deuxième bordure 36.

Les fils ou torons utilisés pour réaliser la chaussette 30 comprennent des fibres minérales, métalliques, de polymères thermoplastiques ou de polymères thermodurcissables ou un mélange de ces fibres. Comme fibres minérales, nous avons le carbone, le verre, le céramique, le silice, le carbure de silicium. S'agissant des fibres de polymère thermoplastique ou thermodurcissable, celles-ci peuvent être en aramide, en polyamide ou en alumine. Les fibres métalliques peuvent comprendre de l'acier, du titane, de l'inconel^{®}, du bronze ou encore du cuivre.

De manière avantageuse, le deuxième renfort fibreux de la chaussette 30 est constitué de fibres longues continues.

Avantageusement, le tressage du renfort fibreux (formant la chaussette) est un tressage de type triaxial ou biaxial. Un tressage triaxial permet d'obtenir une tresse dont le périmètre ne se déforme pas lorsque celui-ci subit une traction ou à l'inverse d'avoir une hauteur constante lorsque son périmètre est compressé. En effet, cela apporte de la rigidité dans la direction longitudinale de la tresse qui correspond à la direction de tressage. Dans le tressage triaxial, les fibres s'étendent dans la préforme suivant trois directions, soit une première direction parallèle à la direction longitudinale (formant un angle de 0°) et suivant une deuxième et une troisième directions formant chacune un angle compris entre 0° et 90° par rapport à la direction longitudinale. Le tressage biaxial permet de faciliter la déformation avant la densification par une matrice.

En référence aux figures 7 et 8, le procédé comprend une étape 150 d'insertion du premier noyau 40 dans (à l'intérieur) la chaussette 30 tressée. Après insertion, les fibres de la chaussette 30 sont appliquées sur quatre surfaces de drapage 41, 42 du noyau qui sont juxtaposées autour d'un un axe central C du noyau 40 comme cela est illustré sur la figure 7. Le noyau 40 comprend des faces 45, 46 qui sont opposées suivant l'axe C (et suivant ici la direction longitudinale L de la chaussette 30 en référence à la figure 6). En particulier, chaque face 45, 46 est définie dans un plan perpendiculaire au plan des surfaces de drapage 41, 42. Une fois le noyau 40 inséré dans la chaussette 30,les faces 45, 46 ne sont pas recouvertes par la chaussette 30.

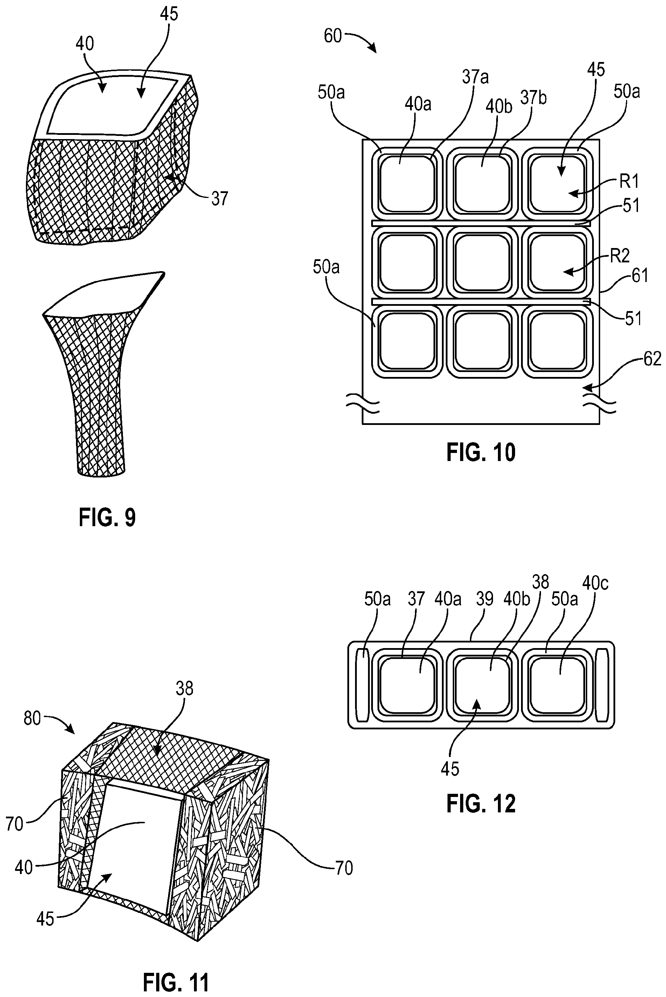

En référence à la figure 9, le procédé comprend une étape 160 de découpage de la chaussette 30 de manière à former une première portion de chaussette 37 ayant une longueur prédéterminée correspondant à la hauteur h du noyau. De même, la longueur de la chaussette découpée correspond sensiblement à la hauteur de la paroi de la structure alvéolaire de la pièce finale.

Le procédé comprend une étape 170 drapage d'au moins une bande DLF 50a du premier renfort fibreux sur (autour de) la chaussette 30. La bande DLF 50a est disposée de manière à réaliser les parois ou jonctions qui séparent les alvéoles de la pièce finale. Plusieurs bandes DLF sont disposées et/ou empilées autour de la chaussette (en regard des surfaces de drapage) et recouvrent tout ou partie des surfaces de drapage 41, 42. De manière alternative, une seule et unique bande DLF 50a entoure la portion de chaussette 37.

L'ensemble (premier ensemble) «première portion de chaussette 37 (découpée) contenant le premier noyau 40a et d'une bande 50a drapée autour de la chaussette 30 » est mis en place (étape 180) dans un moule 60, lequel est schématisé sur la figure 10. Le moule 60 comprend des pans latéraux 61 lesquels s'élèvent depuis une paroi de fond 62. L'ensemble est installé de telle sorte que la face 45 du noyau non drapée soit tournée vers l'extérieur du moule 60 (ou opposée et à distance de la paroi de fond 62 du moule 60).

Ces dernières étapes sont répétées plusieurs fois avec la même chaussette en boyau continu. C'est-à-dire qu'un deuxième noyau 40b est inséré dans la même chaussette 30 qui est découpée pour former une deuxième portion de chaussette 37b (cf. figure 10) à la hauteur du deuxième noyau 40b. Puis une ou des bandes DLF 50a sont drapée(s) sur la deuxième portion de chaussette 37b, puis cet ensemble (deuxième ensemble) est mis en place dans le moule 60. Le deuxième ensemble est disposé à côté du premier ensemble, suivant une première rangée R1. Ces opérations se répètent jusqu'au remplissage de la surface du moule, rangée après rangée.

Suivant une alternative et comme représenté sur la figure 10, l'étape 180 peut comprendre une sous étape 181 de mise en place d'un pli 51 (ou autre renfort fibreux) entre chaque rangée R1, R2 d'ensemble de noyaux, chaussettes, bande(s) DLF. Le pli 51 est agencé après que chaque rangée R1, R2 a été complétée. En d'autres termes, deux rangées sont séparées suivant une direction parallèle à la paroi de fond 62 (et/ou perpendiculaire à la direction du pli) par un pli 51. Avantageusement, le pli unidirectionnel se présente sous la forme d'une plaque rectangulaire ou un empilement de plis qui forme une plaque. Le pli 51 présente une épaisseur, une longueur et une largeur. L'épaisseur est comprise entre 0.010 mm et 10 mm. La longueur et la largeur dépendent des dimensions de la pièce finale. Chaque pli 51 peut être constitué d'une nappe unidirectionnelle dans laquelle les fibres sont parallèles les unes aux autres. Le pli 51 peut être également réalisé à partir d'une bande DLF ou être tissé. De manière avantageuse, les fibres du pli 50 sont pré-imprégnées. Un tel pli est employé par exemple dans le cadre de la fabrication d'une grille d'inverseur de poussée.

Dans le cadre de la réalisation de la pièce 20b, le procédé 100 peut comprendre, préalablement à l'étape 180, une étape 190 de disposition d'une couche d'un troisième renfort fibreux sur la paroi de fond 62 du moule 60. Ce troisième renfort fibreux peut être une portion de la nappe DLF ou un stratifié à fibres longues continues. Les différents ensembles sont mis en place dans le moule sur cette couche de troisième renfort.

Le procédé comprend en outre une étape 200 de polymérisation de la préforme de manière à densifier les renforts fibreux. De manière avantageuse, la polymérisation est une thermocompression. La thermocompression consiste en l'application d'une pression et d'un cycle de température prédéterminés. Le moule 60 est installé dans un four qui sera chauffé. En particulier, la température de polymérisation est comprise entre 150° C et 400°C. La température peut être fixe ou variable durant le cycle. Lors de la polymérisation, la pression appliquée est comprise entre 0.1 et 200 bars. S'agissant de la thermocompression un effort est exercé par exemple sur la surface de la chaussette ou par les surfaces extérieures du moule. La pression est appliquée sur les surfaces/faces de chaque noyau (dans chaque portion de chaussette) dans au moins deux directions. De manière avantageuse, la pression est appliquée dans plusieurs directions. La pression peut être réalisée au moyen de pistons. Dans le cas d'une chaussette réalisée par un tressage triaxial, la hauteur de la chaussette n'évolue pas et le périmètre de la chaussette est figé après la polymérisation.

De manière avantageuse, chaque ensemble chaussette, noyau, bande(s) DLF peut subir une étape 210 de polymérisation partielle ou pré-cuisson. Il s'agit d'un premier traitement thermique qui entame la polymérisation de la résine ou matrice pour adapter le minimum de viscosité et éviter que la résine soit trop fluide lors de l'application de la pression tout en faisant en sorte que celles-ci soit encore malléables. Nous comprenons que cette étape a lieu avant l'étape 200 de polymérisation. De manière avantageuse, cette étape 210 est réalisée avant l'étape 180 de mise en place dans le moule. Une telle polymérisation partielle permet de prévenir de la migration de trop de résine au travers de la chaussette et les bandes DLF. De même, si la résine est trop fluide, la résine peut circuler plus vite que les fibres ce qui peut provoquer l'éjection de la résine. De la sorte, la migration uniforme de la résine lors de cette étape de polymérisation partielle est contrôlée et permet de réduire les zones de porosités de manière à atteindre les performances mécaniques attendues.

Une étape 210 de polymérisation partielle peut avoir lieu pour le pli 51 avant l'étape 200 de polymérisation. De manière avantageuse, cette étape 210 est réalisée avant la mise en place du pli 51 dans le moule 60.

De même, lors de cette étape 210, la résine est chauffée à une température comprise entre 50° et 150°C et pendant une durée comprise entre 1 min et 60 min. Cette température dépend de la nature de la résine d'imprégnation. Le taux de polymérisation partielle de la résine d'imprégnation est préférentiellement compris entre 10% et 60%. A l'issue de cette étape, la ou les chaussettes 30 et la ou les bande(s) DLF 50a sont relativement rigides, sèches et ne sont pas collantes.

La pièce solidifiée après la polymérisation (étape 200) est ensuite démoulée. Dans le présent exemple, afin de faciliter le démoulage, chaque noyau 40, 40a, 40b est réalisé dans un matériau fusible tel que du sel ou une matière eutectique. D'autres exemples de matériaux fusibles sont bien entendu envisageables. Alternativement, chaque noyau 40, 40a, 40b est constitué de plusieurs blocs pour faciliter le démoulage ultérieur. En d'autres termes, chaque noyau est rigide.

En référence aux figures 2 et 3, la pièce finale, ici une structure alvéolaire est une pièce monobloc (réalisée d'un seul tenant) dont les parois 22 délimitant les alvéoles (vides) sont formées de plusieurs renforts fibreux densifiés par une matrice.

La figure 11 illustre une ébauche 80 d'une portion d'une roue de turbomachine (non représentée). Cette ébauche 80 est destinée à former un doublet avec une paire d'aubes d'une turbomachine qui sont espacées par une alvéole 21 suivant une direction circonférentielle. Le doublet est fabriqué d'une seul tenant et en une seule pièce. Les aubes peuvent être des aubes OGV, telles décrites précédemment, disposées en aval de la soufflante ou des aubes de redresseur (IGV pour « Inlet Guide Vane » en anglais) disposées à l'entrée de la veine primaire. Chaque aube comprend une pale, une plateforme radialement externe en tête de la pale et une plateforme radialement interne en pied de la pale. Chaque aube est réalisée par un renfort fibreux. L'alvéole est réalisée de manière identique à ce qui a été décrit précédemment.

En particulier, l'alvéole est réalisée grâce à un noyau 40 qui est inséré (étape 150) dans une chaussette 30 qui sera découpée (étape 160) en une portion de chaussette 38 à la hauteur du noyau. Le tressage de la chaussette pourrait être réalisé directement sur le noyau qui ferait office de mandrin de support. La portion de chaussette 38 permettra de délimiter au moins en partie les surfaces intrados et extrados de chaque pale et qui sont reliées en amont par le bord d'attaque et en aval par le bord de fuite pour chaque pale. Chaque pale est réalisée par une ou des bandes DLF 50a pour former une préforme 70 de pale d'aube. Pour cela, une ou des bandes DLF 50a sont ensuite drapées (étape 170) autour de la portion de chaussette contenant le noyau, et notamment de part et d'autre du noyau (suivant une direction perpendiculaire à la face 45). Cet ensemble est ensuite mis en place (étape 180) dans le moule 60. La face 45 du noyau est disposée de manière à être sensiblement parallèle à la paroi de fond 62 du moule. Une étape 200 de polymérisation (thermocompression) est effectuée pour densifier l'ensemble (qui est placé dans le moule comme décrit précédemment). Comme dans les modes de réalisation précédents, une étape 210 de polymérisation partielle peut être réalisée avant l'étape de polymérisation. Ces étapes sont répétées plusieurs fois pour chaque paire d'aubes espacées par une alvéole pour former une roue complète.

Le procédé peut également permettre de fabriquer la roue de turbomachine complète (360°), un multiplet ou encore un secteur d'une roue de turbomachine. Le multiplet ou secteur de roue comprend au moins trois aubes (OGV ou IGV) espacées par au moins deux alvéoles. Comme pour le doublet, le multiplet est réalisé d'une seul tenant et en une seule pièce. Pour fabriquer ce multiplet ou secteur, les mêmes étapes décrites en liaison avec les figures 10 et 11 sont mises en œuvre. En particulier, la figure 12 illustre trois noyaux 40a, 40b, 40c et autour des bandes DLF 50a destinées à former quatre préformes de pale. Les noyaux sont respectivement insérés dans une chaussette 30 qui est découpée à la hauteur dudit noyau pour former des portions de chaussette. Une ou plusieurs nappe(s) DLF 50a est/sont drapée(s) autour des portions de chaussette contenant le noyau pour former les préformes des pales des aubes. Dans le cadre du multiplet ou secteur, le procédé comprend une étape 220 de mise en place de la ou d'une chaussette 30 autour des ensembles comprenant ici trois noyaux entourés de chacun d'une portion de chaussette et de bandes DLF. Les ensembles sont juxtaposés suivant sensiblement une rangée avec la face 45 tournée vers l'extérieur. La ou l'autre chaussette sera découpée en une (troisième) portion de chaussette 39 suivant une hauteur correspondant à la corde de la pale ou hauteur des noyaux. De la sorte, la portion de chaussette 39 découpée est disposée en partie radialement inférieure et supérieure des préformes (suivant une direction perpendiculaire à la face 45 des noyaux définie dans un plan qui est parallèle à la paroi de fond du moule) pour relier les quatre préformes de pale et les trois noyaux. Une étape 200 de polymérisation est effectuée pour densifier l'ensemble avec éventuellement, préalablement, une étape de polymérisation partielle.

## Revendications

1. Procédé de fabrication d'une pièce (20) en matériau composite comportant une structure alvéolaire, en particulier de turbomachine (1), la structure alvéolaire comportant au moins une alvéole (21) délimitée par des parois (22) et le procédé comprenant :
- une étape (110) d'approvisionnement d'au moins un premier noyau (40, 40a 40b),
- une étape (120) de fourniture d'une nappe (50) d'un premier renfort fibreux comprenant une pluralité de fibres longues discontinues réparties aléatoirement dans un plan,
- une étape (130) de réalisation d'au moins une bande (50a) du premier renfort fibreux,
- une étape (140) de réalisation d'un deuxième renfort fibreux sous la forme d'une chaussette (30) continue tressée et obtenue par tressage, le deuxième renfort fibreux étant constitué de fibres longues continues,
- une étape (150) d'insertion du premier noyau (40, 40a 40b) dans la chaussette (30),
- une étape (170) de drapage de la bande (50a) du premier renfort fibreux autour de la chaussette (30) contenant le premier noyau,
- une étape (180) de mise en place de l'ensemble formé de la chaussette (30) contenant le premier noyau et de la bande (50a) drapée autour de la chaussette, dans un moule (60), et
- une étape (200) de thermocompression de l'ensemble installé dans le moule (60).

2. Procédé de fabrication selon la revendication précédente, **caractérisé en ce qu'**il comprend une étape de démoulage de la pièce (20) avec le retrait du premier noyau (40, 40a, 40b) amovible pour former l'alvéole.

3. Procédé de fabrication selon la revendication 1 ou 2, **caractérisé en ce qu'**il comprend une étape (160) de découpage dans laquelle la chaussette (30) est découpée de manière à former une première portion de chaussette (37, 37a ; 38) ayant une longueur correspondant à une hauteur du premier noyau (40).

4. Procédé de fabrication selon l'une des revendications précédentes, **caractérisé en ce que** les fibres de la bande (50a) et de la chaussette (30) sont pré-imprégnées.

5. Procédé de fabrication selon l'une des revendications précédentes, **caractérisé en ce que** chaque ensemble est mise en place dans le moule (60) sous forme de rangée (R1, R2).

6. Procédé de fabrication selon la revendication précédente, **caractérisé en ce que** l'étape (180) de mise en place dans le moule (60) comprend une sous étape (181) de mise en place d'un pli (51) entre chaque rangée (R1, R2).

7. Procédé de fabrication selon l'une des revendications précédentes, **caractérisé en ce qu'**il comprend une étape (210) de polymérisation partielle de l'ensemble formé de la chaussette (30) contenant le premier noyau (40, 40a 40b) et de la bande (50a) drapée autour de la chaussette (30), l'étape (210) étant réalisée avant l'étape (200) de polymérisation ou avant l'étape (180) de mise en place dans le moule (60).

8. Procédé de fabrication selon l'une quelconque des revendications précédentes, **caractérisé en ce qu'**au moins un deuxième noyau (40b) est inséré dans la même chaussette (30) qui est découpée en une deuxième portion de chaussette (37b; 38) et au moins une bande (50a) est drapée autour de la deuxième portion de chaussette, et **en ce que** l'ensemble formé de la deuxième portion de chaussette (37b ; 38) autour du deuxième noyau (40b) et la bande (50a) drapée autour de la chaussette (30) est mis en place dans le moule (60).

9. Procédé de fabrication selon la revendication précédente, **caractérisé en ce qu'**il comprend la mise en place au moins d'une troisième portion de chaussette (39) autour d'au moins deux ensembles de noyaux (40, 40a, 40b) contenus chacun dans une portion de chaussettes (37 ; 37a, 37b ; 38) lesquelles sont drapées d'au moins une bande (50a), les deux ensembles étant juxtaposés.

10. Procédé de fabrication selon l'une des revendications précédentes, **caractérisé en ce que** la chaussette (30) est obtenue par un tressage biaxial ou triaxial.

11. Procédé de fabrication selon l'une quelconque des revendications précédentes, **caractérisé en ce que** le premier et/ou le deuxième noyau(x) (40, 40a, 40b) est/sont fusible(s).

12. Pièce de turbomachine (20, 20a, 20b) en matériau composite comprenant au moins un renfort fibreux densifié par une matrice, la pièce de turbomachine étant réalisée par le procédé selon l'une quelconque des revendications précédentes et comprenant une structure alvéolaire avec au moins une alvéole (21) délimitée et séparée par des parois.

13. Pièce de turbomachine (20, 20a, 20b) selon la revendication précédente, **caractérisée en ce que** la pièce de turbomachine est une grille d'inverseur de poussée, un volet d'inverseur de poussée, une paire d'aubes reliées par une plateforme radialement interne et par une plateforme radialement externe, l'alvéole séparant la paire d'aubes suivant une direction circonférentielle, un multiplet comprenant au moins trois aubes espacées par des alvéoles ou une roue de turbomachine.

## Patentansprüche

1. Herstellungsverfahren für ein Teil (20) aus Verbundwerkstoff, das eine Zellenstruktur umfasst, insbesondere für ein Turbotriebwerk (1), wobei die Zellenstruktur mindestens eine Zelle (21) umfasst, die durch Wände (22) begrenzt ist, und wobei das Verfahren umfasst:
- einen Schritt (110) des Beschaffens mindestens eines ersten Kerns (40, 40a, 40b),
- einen Schritt (120) des Bereitstellens einer Bahn (50) aus einer ersten Faserverstärkung, die eine Vielzahl von langen, nicht durchgehenden Fasern umfasst, die zufällig in einer Ebene verteilt sind,
- einen Schritt (130) des Herstellens mindestens eines Streifens (50a) aus der ersten Faserverstärkung,
- einen Schritt (140) des Herstellens einer zweiten Faserverstärkung in Form eines durch Flechten erhaltenen und durchgehenden geflochtenen Strumpfes (30), wobei die zweite Faserverstärkung aus langen, durchgehenden Fasern besteht,
- einen Schritt (150) des Einsetzens des ersten Kerns (40, 40a, 40b) in den Strumpf (30),
- einen Schritt (170) des Wickelns des Streifens (50a) aus der ersten Faserverstärkung um den Strumpf (30), der den ersten Kern enthält,
- einen Schritt (180) des Anbringens der Baugruppe, die von dem den ersten Kern enthaltenden Strumpf (30) und dem um den Strumpf gewickelten Streifen (50a) gebildet wird, in einer Form (60), und
- einen Schritt (200) des Thermokomprimierens der in der Form (60) installierten Anordnung.

2. Herstellungsverfahren nach dem vorstehenden Anspruch, **dadurch gekennzeichnet, dass** es einen Schritt des Entformens des Teils (20) mit den Entfernen des ersten entfernbaren Kerns (40, 40a, 40b) umfasst, um die Zelle zu bilden.

3. Herstellungsverfahren nach Anspruch 1 oder 2, **dadurch gekennzeichnet, dass** es einen Schritt (160) des Zuschneidens umfasst, wobei der Strumpf (30) zugeschnitten wird, um einen ersten Strumpfabschnitt (37, 37a; 38) zu bilden, der eine Länge aufweist, die einer Höhe des ersten Kerns (40) entspricht.

4. Herstellungsverfahren nach einem der vorstehenden Ansprüche, **dadurch gekennzeichnet, dass** die Fasern des Streifens (50a) und des Strumpfes (30) vorimprägniert werden.

5. Herstellungsverfahren nach einem der vorstehenden Ansprüche, **dadurch gekennzeichnet, dass** jede Baugruppe in Form einer Reihe (R1, R2) in der Form (60) angebracht wird.

6. Herstellungsverfahren nach dem vorstehenden Anspruch, **dadurch gekennzeichnet, dass** der Schritt (180) des Anbringens in der Form (60) einen Teilschritt (181) des Anbringens einer Falte (51) zwischen jeder Reihe (R1, R2) umfasst.

7. Herstellungsverfahren nach einem der vorstehenden Ansprüche, **dadurch gekennzeichnet, dass** es einen Schritt (210) des teilweisen Polymerisierens der Baugruppe umfasst, die von dem den ersten Kern (40, 40a, 40b) enthaltenden Strumpf (30) und dem um den Strumpf (30) gewickelten Streifen (50a) gebildet wird, wobei der Schritt (210) vor dem Schritt (200) des Polymerisierens oder vor dem Schritt (180) des Anbringens in der Form (60) ausgeführt wird.

8. Herstellungsverfahren nach einem der vorstehenden Ansprüche, **dadurch gekennzeichnet, dass** mindestens ein zweiter Kern (40b) in denselben Strumpf (30) eingeführt wird, der zu einen zweitem Strumpfabschnitt (37b; 38) zugeschnitten wird, und mindestens ein Streifen (50a) um den zweiten Strumpfabschnitt gewickelt wird, und dadurch, dass die Baugruppe, die von dem zweiten Strumpfabschnitt (37b; 38) um den zweiten Kern (40b) und dem um den Strumpf (30) gewickelten Streifen (50a) gebildet wird, in der Form (60) angebracht wird.

9. Herstellungsverfahren nach dem vorstehenden Anspruch, **dadurch gekennzeichnet, dass** es das Anbringen mindestens eines dritten Strumpfabschnitts (39) um mindestens zwei Kernbaugruppen (40, 40a, 40b) umfasst, die jeweils in einem Strumpfabschnitt (37; 37a, 37b; 38) enthalten sind, welche mit mindestens einem Streifen (50a) umwickelt sind, wobei die zwei Baugruppen nebeneinanderliegen.

10. Herstellungsverfahren nach einem der vorstehenden Ansprüche, **dadurch gekennzeichnet, dass** der Strumpf (30) durch ein biaxiales oder triaxiales Flechten erhalten wird.

11. Herstellungsverfahren nach einem der vorstehenden Ansprüche, **dadurch gekennzeichnet, dass** der erste und/oder der zweite Kern (40, 40a, 40b) schmelzbar ist/sind.

12. Turbotriebwerksteil (20, 20a, 20b) aus Verbundwerkstoff, der mindestens eine Faserverstärkung umfasst, die durch eine Matrix verdichtet ist, wobei das Turbotriebwerksteil über das Verfahren nach einem der vorstehenden Ansprüche hergestellt wird und eine Zellenstruktur mit mindestens einer Zelle (21) umfasst, die durch Wände begrenzt und getrennt ist.

13. Turbotriebwerksteil (20, 20a, 20b) nach dem vorstehenden Anspruch, **dadurch gekennzeichnet, dass** das Turbotriebwerksteil ein Schubumkehrgitter, eine Schubumkehrklappe, ein Schaufelpaar, das durch eine innere radiale Plattform und durch eine äußere radiale Plattform verbunden ist, wobei die Zelle das Schaufelpaar in einer Umfangsrichtung trennt, ein Multiplett, das mindestens drei Schaufeln umfasst, die durch Zellen beabstandet sind, oder ein Turbotriebwerksrad ist.

## Claims

1. A method for manufacturing a part (20) made of composite material comprising a cellular structure, in particular for a turbomachine (1), the cellular structure comprising at least one cell (21) delimited by walls (22) and the method comprising:
- a step (110) of supplying at least one first core (40, 40a 40b),
- a step (120) of providing a lap (50) of a first fibrous reinforcement comprising a plurality of discontinuous long fibres randomly distributed in a plane,
- a step (130) of producing at least one strip (50a) of the first fibrous reinforcement,
- a step (140) of producing a second fibrous reinforcement in the form of a continuous braided sock (30) and obtained by braiding, the second fibrous reinforcement consisting of continuous long fibres,
- a step (150) of inserting the first core (40, 40a 40b) into the sock (30),
- a step (170) of draping the strip (50a) of the first fibrous reinforcement around the sock (30) containing the first core,
- a step (180) of placing the assembly formed by the sock (30) containing the first core and the strip (50a) draped around the sock in a mould (60), and
- a step (200) of thermocompression of the assembly installed in the mould (60).

2. The manufacturing method according to the preceding claim, **characterised in that** it **characterized in that** it comprises a step of demolding the part (20) with the removal of the first removable core (40, 40a, 40b) to form the cell.

3. The manufacturing method according to claim 1 or 2, **characterised in that** it comprises a cutting step (160) in which the sock (30) is cut so as to form a first sock segment (37, 37a; 38) having a length corresponding to a height of the first core (40).

4. The manufacturing method according to any of the preceding claims, **characterised in that** the fibres of the strip (50a) and the sock (30) are pre-impregnated.

5. The manufacturing method according to any of the preceding claims, **characterised in that** each assembly is placed in the mould (60) in the form of a row (R1, R2).

6. The manufacturing method according to the preceding claim, **characterised in that** the step (180) of placing in the mould (60) comprises a sub-step (181) of placing a ply (51) between each row (R1, R2).

7. The manufacturing method according to one of the preceding claims, **characterised in that** it comprises a step (210) of partial polymerisation of the assembly formed by the sock (30) containing the first core (40, 40a, 40b) and the strip (50a) draped around the sock (30), the step (210) being carried out before the step (200) of polymerisation or before the step (180) of placing in the mould (60).

8. The manufacturing method according to any of the preceding claims, **characterised in that** at least one second core (40b) is inserted into the same sock (30) which is cut into a second sock segment (37b; 38) and at least one strip (50a) is draped around the second sock segment, and **in that** the assembly formed by the second sock segment (37b; 38) around the second core (40b) and the band (50a) draped around the sock (30) is placed in the mould (60).

9. The manufacturing method according to the preceding claim, **characterised in that** it comprises placing at least one third sock segment (39) around at least two assemblies of cores (40, 40a, 40b) each contained in a sock segment (37; 37a, 37b; 38) which are draped with at least one strip (50a), the two assemblies being juxtaposed.

10. The manufacturing method according to any of the preceding claims, **characterised in that** the sock (30) is obtained by biaxial or triaxial braiding.

11. The manufacturing method according to any of the preceding claims, **characterised in that** the first and/or the second core or cores (40, 40a, 40b) is or are fusible.

12. A turbomachine part (20, 20a, 20b) made of composite material comprising at least one fibrous reinforcement densified by a matrix, the turbomachine part being produced by the method according to any of the preceding claims and comprising a cellular structure with at least one cell (21) delimited and separated by walls.

13. The turbomachine part (20, 20a, 20b) according to the preceding claim, **characterised in that** the turbomachine part is a thrust reverser grid, a thrust reverser flap, a pair of vanes connected by a radially internal platform and by a radially external platform, the cell separating the pair of vanes in a circumferential direction, a multiplet comprising at least three vanes spaced apart by cells, or a turbomachine wheel.
